# EUROPEAN PATENT APPLICATION

(11) **EP 2 166 735 A1**
(43) Date of publication of application: **24.03.2010**
(21) Application number: 08105386.0
(22) Date of filing: 19.09.2008
(51) Int. Cl.: H04L 29/12, H04W 8/26

(54) **Method and device for data processing and communication system comprising such device**

(71) Applicant: Nokia Siemens Networks OY, 02610 Espoo (FI)
(72) Inventor: Hahn, Wolfgang, 16562 Bergfelde (DE); Pelkonen, Mari-Jaana, 04350 Nahkela (FI)
(74) Representative: Bruglachner, Thomas E.

(57) **Abstract**

A method and a device for data processing are provided, wherein a mobile terminal addressed and/or served by a base station is associated with a layer-2 address; wherein data is conveyed in a network utilizing said layer-2 address; and wherein said network comprises a layer-2 network, in particular an Ethernet and/or a carrier Ethernet. Furthermore, a communication system is suggested comprising said device.

## Description

The invention relates to a method and to a device plural for data processing and to a communication system comprising such a device.

Mobility management (MM) for mobile nodes (e.g., UEs) in cellular packet networks is usually handled by tunneling data via a transport IP network. In case of changing the location of the mobile nodes, tunnel addresses are changed and the tunnel is switched.

This concepts applies for 3GPP(2) networks as well as for WiMAX and Mobile IP (MIP) concepts in general.

In the next 5 to 10 years, an increase of mobile data traffic is expected by a factor in the range of 100 to 1000. This demand for additional traffic can only be met in case cost per bit is reduced. In order to achieve high mobile data rates, a cell size needs to be reduced and a huge number of additional base stations (in LTE: eNodeBs) will be deployed and need to be managed.

In such mobile network scenario with a flat mobile architecture, i.e. comprising mainly base stations and gateways, each gateway needs to be connected to thousands of base stations. This leads to a tremendous signaling load in order to process the mobility of the UEs. In addition, as the gateways are located with a more centralized core network, MM messages are further delayed resulting in missing synchronicity of the UE and a path switch of the core network. It is a further disadvantage that large IP networks are costly in terms of network management.

The problem to be solved is to overcome the disadvantages mentioned above and in particular to allow an efficient handling of a large number of base stations via an access gateway.

This problem is solved according to the features of the independent claims. Further embodiments result from the depending claims.

In order to overcome this problem, a method is provided for data processing
- wherein a mobile terminal addressed and/or served by a base station is associated with a layer-2 address;
- wherein data is conveyed in a network utilizing said layer-2 address;
- wherein said network comprises a layer-2 network, in particular an Ethernet and/or a carrier Ethernet.

The mobile terminal may be any device or terminal operated by and/or being operable with a cellular and/or mobile network. The mobile terminal may be any device comprising a or being associated with a cellular functionality, e.g., a personal digital assistant, a mobile phone, a computer, etc. The mobile terminal is also referred to as user equipment (UE).

As an option, several or all mobile terminals of a base station may be associated with layer-2 addresses.

Such association with a layer-2 address may in particular comprise assigning of the layer-2 address to the mobile terminal. Once a layer-2 address is assigned to the mobile terminal it is utilized for addressing said mobile terminal, e.g., throughout the layer-2 network. The base station may in particular know which mobile terminal to contact via which layer-2 address. Hence, layer-2 address mapping to an actual ID of the mobile terminal can be transparently provided at the base station. The mobile terminal does not have to be aware of its layer-2 address utilized by the base station and the network.

Hence, an existing layer-2 network can be efficiently utilized to process data to/from a base station. Thus, a cellular network is combined with a layer-2 network such as the Ethernet or a carrier Ethernet (CE).

CE allows utilizing a new structure for the mobile network comprising segments of layer-2 networks thereby providing mobility by inherent layer-2 features. This approach refers to LTE/SAE of 3GPP as well as to any other access system.

According to an embodiment, the layer-2 address is assigned and/or utilized by a cellular network.

In an embodiment, the data is conveyed between the base station (to which the mobile terminal is connected) and an access gateway via said layer-2 network.

At least one base station may be connected to a switch or a bridge providing MAC learning functionality and said switch or bridge may be further connected via the Ethernet and/or via the CE to the access gateway. In this regards, several switches and/or bridges may be provided for several base stations. In particular, a base station may also be connected to several switches/bridges.

The access gateway may comprise a control part, e.g., a mobility management entity, and a user plane part, e.g., a PDN GW and/or a S-GW.

The base station and the access gateway may exchange information via layer-2, wherein for the network in between, these components may only require layer-2 functionality, in particular a transport service provided by said layer-2.

Advantageously, this approach is compatible with existing mobile terminals, existing bridges/switches and existing layer-2 networks. Preferably, the base station and/or the access gateway are supplemented by an Ethernet Adaptation Function (EAF) to provide said efficient combining of the cellular network and the layer-2 network.

Preferably, said EAF is implemented such that it copes with existing functionality of the base station and/or the access gateway and provides the services required utilizing in particular mapping and cross-layer functionality to efficiently cooperate with existing implementations.

In a further embodiment, an Ethernet Adaptation Function is provided with the base station and/or with the access gateway to enable layer-2 processing in particular tunneling between the access gateway and the base station.

For example, vTEIDs are introduced in particular associated with said layer-2 addresses to identify the tunnels. A tunnel can be associated with a bearer or a QoS and the tunnel may be allocated for the lifetime of the bearer, it may in particular remain unchanged in case of handover.

In a next embodiment, the layer-2 address that is in particular used for the mobile terminal's traffic (comprising signaling data and user data) is supplied by the access gateway and/or by the base station.

Advantageously, a unique layer-2 address is provided within the sphere or the "serving area" of the access gateway.

It is also an embodiment that the base station maps the layer-2 address of the mobile terminal to an identifier of the mobile terminal and conveys data towards the mobile terminal via such identifier.

Thus, the base station redirects traffic towards the mobile terminal without the necessity for the mobile terminal to be aware of the layer-2 addressed assigned to and/or utilized for it.

The identifier can be any means to identify the mobile terminal by a base station according to existing cellular solutions.

Pursuant to another embodiment, said layer-2 address is assigned to the mobile terminal or to each IP address of the mobile terminal.

According to an embodiment, said layer-2 address is a virtual MAC address, in particular derived from and/or associated with a unique identifier of the mobile terminal in a serving area, e.g., a "MME UE S1AP ID" used between base stations and access gateway to uniquely identify active UEs in case of 3GPP LTE/SAE.

According to another embodiment, the base station is assigned to at least one Ethernet mobility segment.

In yet another embodiment, each at least one Ethernet mobility segment is processed by at least one Ethernet switch in particular providing a MAC learning functionality.

As an option, the switch may comprise an aging timer that in terms of duration preferably corresponds to an idle timer used for the mobile terminal in the cellular network.

According to a next embodiment, the at least one Ethernet mobility segment is connected to the Ethernet and/or the carrier Ethernet.

Hence, advantageously, this approach allows handling of mobility by the EMS and/or layer-2; any path switching functionality on layer-3 and/or the mobile network is not required and can even be suppressed.

The problem stated above is also solved by a device comprising a and/or being associated with a processor unit and/or a hard-wired circuit and/or a logic device that is arranged such that the method as described herein is executable on said processor unit.

According to an embodiment, the device is a communication device, in particular a or being associated with a base station, wherein said device is in particular connected to a layer-2 network.

According to a further embodiment, the device is a communication device, in particular a or being associated with an access gateway in particular comprising a control part and a user plane part, wherein said device is in particular connected to a layer-2 network.

The problem stated supra is further solved by a communication system comprising the device as described herein.

Embodiments of the invention are shown and illustrated in the following figures:
- Fig.1: shows a network topology with base stations connected to switches, wherein the switches comprise a MAC learning functionality and a connected via a layer-2 network to an access gateway;
- Fig.2: shows a message sequence chart according to 3GPP TS 23.401 V8.2.0 (2008-06), Figure 5.5.1.1.2-1, "Inter eNodeB handover without MME and without Serving GW relocation";
- Fig.3: shows a mobile access system comprising a base station and an access gateway, both being supplied by the Ethernet Adaptation Function (EAF);
- Fig.4: shows a message sequence chart visualizing a request and/or establishment of a data bearer service;
- Fig.5: shows a message sequence chart visualizing a BS-to-BS handover within an Ethernet Mobility Segment (EMS);
- Fig.6: visualizes details of the EAF in the eNB to provide bearer setup with a virtual Tunnel Endpoint Identifier (vTEID);
- Fig.7: visualizes details of the EAF in the eNB regarding downlink data; and
- Fig.8: visualizes details of the EAF in the eNB regarding uplink data.

The approach provided in particular suggests adding a layer-2 Ethernet mobility hierarchy to a traditional cellular network. Preferably, an access network between a base station and a gateway is Ethernet-based and/or comprises a Carrier Ethernet (CE) which may be managed as a pure layer-2 network without any need of providing IP routing functionality.

Advantageously, such approach would not require any changes to existing or legacy Ethernet and/or CE components or in particular to the UEs.

The additional hierarchy unloads the gateway (GW) from handling a significant amount of mobility events. It also enables fast user plane (UP) switches being deployed near the base stations and thus largely avoids data forwarding.

Mobility events of higher hierarchy, e.g., inter-operator or inter-access system events, can be processed by this approach as well. In addition, the proposal is capable of supporting and/or processing existing tunneling mechanisms without any need for them being changed.

In order to efficiently provide Ethernet-based mobility, a virtual MAC address scheme is introduced that is preferably supported by the base stations as well as the GWs. Thus, a layer-2 address, in particular a virtual MAC address, may be assigned to an UE or per each IP address of a UE.

It is noted that UE may refer to any mobile terminal or terminal that can be used with a cellular network. The UE may be or may be associated with a device, in particular a mobile or portable device, e.g., a telephone, a PDA, a computer or the like.

Further, the mobile network may be structured and/or segmented into segments, in particular into LAN segments. For each such segment, mobility may be handled by at least one Ethernet switch, which may provide standard learning procedures for MAC addresses similarly applied to said virtual MAC addresses. Such segment may be referred to as Ethernet Mobility Segment (EMS).

The EMS may relate to a topological area of the mobile network comprising several cells (in particular at least one cell). One or more such EMS can be related to a Location Area (LA) of the mobile network. At least one EMS can be connected to an access gateway utilizing CE mechanisms (e.g., QinQ, Mac-in-Mac, PBB-TE, etc.). In terms of mobile backhaul, the EMS is associated with the access network and the CE is associated with the aggregated and/or Metro network, in particular providing the service that a remote GW can be part of the L2 network the base stations of the EMS may be associated with.

In order to obtain a structure for the mobile network, i.e. the structure of said EMSs, CE concepts can be applied such as PBB-TE (802.1Qah, 802.1Qay), VLAN-XC or Ethernet services of VPLS or VPWS Pseudowires (MPLS based).

The architecture of the mobile network may be maintained in order to limit implementation efforts, in particular changes to existing components (as far as possible). Preferably, only new interfaces and/or functionalities for supporting layer-2 features are added.

It is noted that layer-2 mobile backhaul topology may extend to existing or future implementations.

An advantage of this proposal is an additional optimization of existing mobility mechanisms, which may in particular be used in parallel to the existing mechanisms. That implies that an existing tunneling concept as introduced to mobile networks may be largely kept as is (in particular only minor adjustments may be required). In this context, it is suggested providing one vMAC per UE with different bearer tunnels, which can be mapped to tunnels of the core network (which are known as GTP tunnels according to 3GPP). This yet allows distinguishing in each base station different qualities of service (QoSs), which are to be applied on the air interface. The bearer tunnels for one user and/or for one vMAC are identified by virtual tunnel endpoint identifiers (TEIDs) also referred to as vTEIDs.

In particular, the proposal allows using existing protocol definitions and may provide different behavior of particular network elements for such protocol definitions. It may also define as how to use existing protocol parameters in a different way, e.g., a signaling protocol between the base station and the access gateway may suggest a different identification for active users by using vMAC or a Bearer ID may become said vTEID.

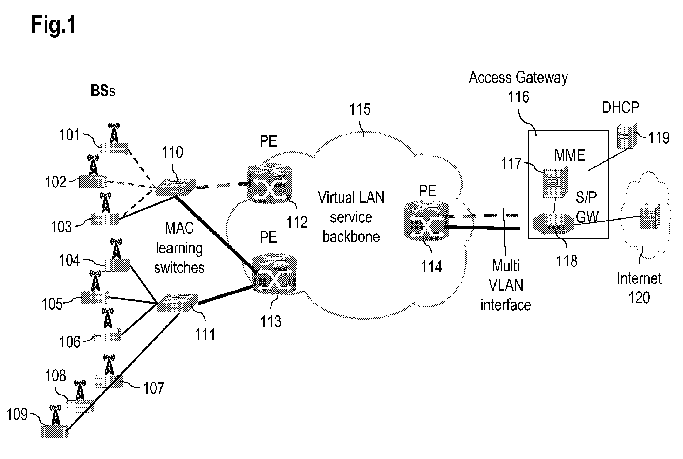

**Fig.1** shows a network topology with base stations 101 to 103 connected to a switch 110 and base stations 104 to 109 connected to a switch 111. The switches 110 and 111 may be switches comprising a MAC learning functionality.

The switch 110 is connected to a provider edge PE 112 and to a provider edge PE 113, the switch 111 is connected to the provider edge PE 113. The provider edges 112 and 113 are layer-2 edge routers of a virtual LAN service backbone 115, which also comprises a provider edge PE 114 that is connected via a multi VLAN interface to an access gateway 116 comprising a Mobility Management Entity MME 117 control part connected to a Serving GW and/or a Packet Data Network (PDN) GW 118 as a user plane (UP) part. The access gateway 116 is further connected to a DHCP server 119 and the S/P GW 118 is further connected to the Internet 120.

The mobile access network may be segmented in layer-2 (L2) mobility segments EMS, whereas carrier Ethernet (CE) is deployed in a mobile aggregate and/or in a Metro network to connect access networks to the mobile core network.

In Fig.1, one EMS comprises base stations 101 to 103, another EMS comprises base stations 103 to 109. One EMS comprises at least one Ethernet switch 110 and/or 111. A spanning tree algorithm can be used with each EMS area to obtain a loop-free tree topology.

Each EMS is connected to the aggregate network via PEs 112 and 113. The aggregate network provides L2 tunneling (e.g., QinQ, MAC-in-MAC, etc.) towards the access gateway 116. For the topology shown in Fig.1, the number of L2 tunnels that need to be maintained by the access gateway 116 may correspond to the number of EMSs connected to it.

### Suppression of mobility handling in GW

If a UE moves to a new BS of the same layer-2 EMS, this mobility event may be hidden to the access gateway 116 or any such mobility handling may be suppressed in the access gateway 116.

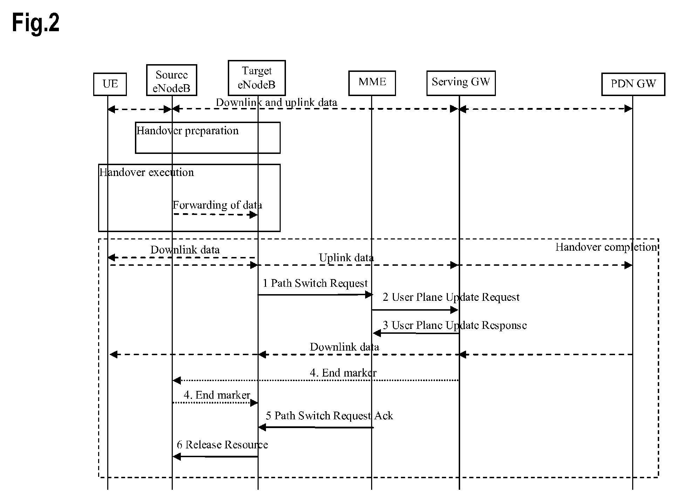

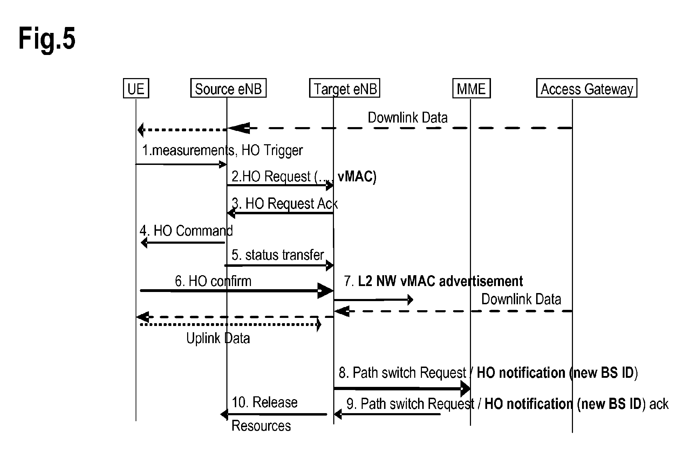

**Fig.2** shows a message sequence chart according to 3GPP TS 23.401 V8.2.0 (2008-06), Figure 5.5.1.1.2-1, "Inter eNodeB handover without MME and without Serving GW relocation". According to the approach presented herein, there is no need for a path switch and/or user plane update in the access gateway 116 (hence messages 2 and 3 involving the Serving Gateway of Fig.2 can be cut down).

To facilitate this, the MME 117 checks if source and target base stations are in the same EMS. Thus, the MME 117 is notified about a handover by the base station.

As an option, the base station may check if target and source base stations are in the same EMS that may in particular allow suppressing handover signaling with the access gateway 116.

If the target base station is within the same EMS as the source base station, the source BS may
(a) suppress a path switch request sent to the MME 117 or
(b) send a path switch request to the access gateway 116, in particular to the MME 117, such request comprising the address of the target base station (new serving BS address, which allows setting up a new signaling connection between the MME 117 and the target base station) and an indication that the UP path does not have to be switched.

An advantage of the concept under (a) is that signaling traffic to/from the access gateway 116 (and MME 117) is significantly reduced. This may be compensated by signaling information being forwarded between the base stations. The concept (b) reduces mobility signaling for the UP part of the access gateway. Signaling to the MME, however, may be set to a low priority in case of high load situations of the MME as there may be no need for immediate action compared to a user plane path switch in a state of the art cellular network.

### Options for provisioning of the EMS-ID to BS relation

The network may provide a database comprising relations of a base station and/or a cell with regard to an identifier of the EMS associated. Such information could be provided to the base station, e.g., by IP address provisioning (in addition to DHCP or the like) or by means of operation and maintenance (O&M), or via self-configuration network solutions. Such information may also be sent between base stations via handover signaling.

### Further functions of the base station(s)

In handover signaling, the virtual MAC address (vMAC) of the UE is conveyed in particular in case it is not intended or possible to generate the vMAC in the target base station based on available parameters that uniquely identify the UE at least in an EMS. Reference is made to the section describing the generation of the vMAC below.

Thus, the target (new) base station may promptly start vMAC learning in the Ethernet and take over the traffic for this particular UE.

An interface between the base station functionality and the layer-2 transport functionality is provided by an Ethernet Adaptation Function (EAF).

As an option, the EAF may provide adaptations required for existing network elements (in particular: base stations, access gateway) in order to allow only minor changes applied to said network elements. In other words, the EAF is a function implemented with the network element to interface with existing functionality of this network element and to provide the additional functionality as described herein. This may be achieved by an EAF intercepting user traffic as well as signaling traffic and further providing mapping functionality and modifying the UP packet headers as well as signaling messages.

The EAF may keep (in particular: store and/or maintain) vMACs of the UEs for which a base station processes downlink data.

Regarding downlink data for a UE, the EAF provides a mapping functionality between the base station's internal identification of bearers (e.g., per TEID) and an identification of the interface between the access gateway and the base station utilizing said virtual TEIDs (vTEIDs) as described above. The vTEID is provided in the tunnel protocol utilized, e.g., in GTP the vTEID is used as TEID. As described below, such tunnel may be allocated for the bearer's lifetime. For coding purposes, a bearer ID used in the control signaling may be utilized.

### Routing of downlink packets to the serving base station

Each EMS comprises at least one LAN bridge and/or at least one switch (see switches 110 and 111 in Fig.1) providing MAC learning functionality for the nodes at its ports.

For each UE that moves to a base station and wants to start data exchange, this base station allocates a virtual MAC address (vMAC) for this UE and conveys said vMAC to the switch attached. This can be done by a control message towards the switch, e.g., a ARP message, an ICMP ("ping") or the like. For the switch, the vMAC is considered a conventional MAC address that is learned at said switch. The vMAC conveyed to the UE may be provided by the access gateway, in particular by the MME of the access gateway.

As an alternative, the vMAC may be generated by and/or at the base station. However, a mechanism shall be provided that guarantees uniqueness of such vMAC within the sphere of at least one EMS and/or one access gateway. One approach to generate a unambiguous vMAC at the base station is to utilize a unique identifier of the base station and combine it with a further ID that allows this base station to distinguish the UEs attached or the vMACs generated by this base station from one another. The binding information between the UE's identity and the vMAC hence may be sent to the access gateway.

Subsequently, the base station may receive all data packets
- destined for the base station's physical MAC address (signaling messages and data in case of forwarding applies via layer-3 tunnels) and
- for all its virtual MAC addresses.

This concept introduces a fast and efficient micro mobility mechanism that does not require for long distance signaling messages.

The switch capable of MAC learning may comprise a non-permanent or short-term memory (cache) that could be combined with an aging mechanism (i.e. an aging timer), e.g., MAC addresses that are not received for a predetermined period of time are deleted from such memory.

If the network supports UEs in an idle mode, i.e. UEs being inactive and not connected to the network, an idle timer that is reset when a UE enters said idle mode (i.e. if no packets are transmitted for some time) and the aging timer of the switch may advantageously be synchronized. Hence, the aging timer may be of similar duration or it may be longer than the idle timer. This ensures that the switches in the EMS substantially contain vMACs of the active UEs associated with the EMS's base station(s).

### Generation of the virtual MAC address (vMAC):

Such generation may be realized as functionality of the access gateway. The vMAC has to be chosen such that it is unique for an area that is covered and/or served by the MME. This can advantageously be achieved by a centralized generation by the access gateway and/or by the MME. The MME may allocate a vMAC that is unique for the complete area covered by said MME.

Such unique vMAC can be generated based on an identity that is already used in the network that allows an unambiguous identification of an (active) UE by the access gateway and/or the MME and/or the base station(s).

According to 3GPP, a parameter "MME UE S1AP ID" of the S1-AP protocol between the MME and the base station may be utilized for such purpose. With this the vMAC can be generated locally at the base station and/or at the access gateway.

Hence, no additional signaling message is required between the base station and the access gateway and/or between the base stations in case of a handover. The vMAC can be created within the base station without further signaling, i.e. utilizing information already available at the base station. For example, the vMAC can be generated utilizing a 3 byte vendor ID and a 3 byte MME UE S1AP ID.

Otherwise, the signaling messages may be exchanged between the base station and the MME in order to generate a unique vMAC.

With the MME being separated from the S-GW, the MME may provide the vMAC via signaling information to the S-GW in order to allow the UP assigning the vMAC to downlink packets for the respective UE.

### Functions of the Access Gateway - User Plane (S-GW):

The access gateway comprises an EAF that may provide enhancements to the Ethernet transport layer.

In order to apply the EMS concept to the mobile network, the serving gateway (S-GW) may assign the downlink packets to the correct EMS:
- From UE uplink traffic, the S-GW may learn the EMS information (e.g., in terms of VLAN-ID).
- The MME may provide information to the S-GW using a mapping table comprising entries regarding the cell and/or base station and the corresponding EMS.
- The access gateway can be provisioned with an EMS to BS (IP address) mapping table or it may access an external data base as well.

This information enables the S-GW to select the correct interface and/or port that connects to the corresponding EMS. The destination MAC address can be built based on the vMAC assigned in the MME and received in the S-GW.

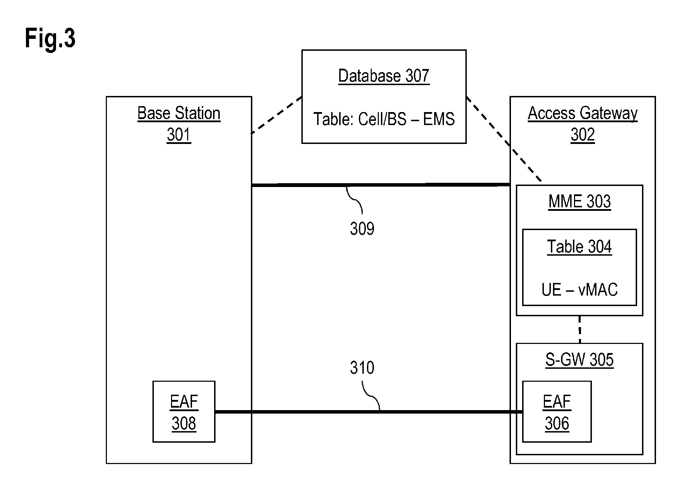

**Fig.3** shows a mobile access system comprising a base station 301 and an access gateway 302, both being supplied by said Ethernet Adaptation Function EAF as described herein.

The base station 301 comprises an EAF 308 and has a logical connection (or access) to a database 307. Said database 307 comprises a table comprising mapping information between a cell and/or base station and a corresponding EMS.

The access gateway 302 comprises an MME 303 and a S-GW 305, wherein the MME 303 comprises a table 304 associating the UEs with vMACs and the S-GW 305 comprises an EAF 306. The MME 303 is connected or has access to said database 307.

The EAF 308 and the EAF 306 are connected via a connection 310 conveying user traffic (IP over Ethernet). A signaling connection between the base station 301 and the access gateway 302 is indicated by a line 309.

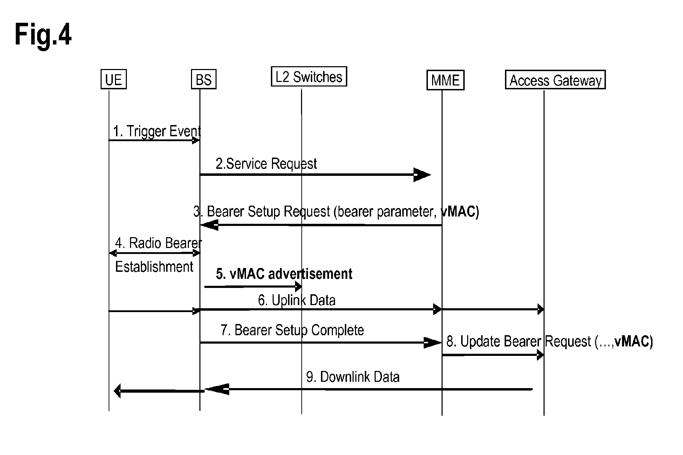

**Fig.4** shows a message sequence chart visualizing a request and/or establishment of a data bearer service. Prior to service, during installation of the base station the database 307 is updated with the information regarding the EMS associated with the base station.

Hereinafter the messages are described. The numbers depicted correspond to the numbers of the messages shown in Fig.4:
(1) and (2) When the UE attaches to the network via the BS and requests a data connection and/or a bearer, the MME checks whether the BS supports Ethernet mobility. In the affirmative, the MME determines the EMS affected.
(3) In case of EMS being supported by the BS, the MME assigns a vMAC for that UE and sends it back to the BS together with other parameters, e.g., related to the radio resources and an uplink data port information of the access gateway (in case of a GTP according to 3GPP, the TEID assigned by the access gateway for uplink transfer).
(4) The BS starts radio bearer establishment towards the UE.
(5) The BS starts advertising the vMAC towards the L2 switches of the EMS for the downlink path using control messages, e.g., "ping" messages.
(6) First uplink packets are delivered to the access gateway comprising the MAC address of the access gateway as destination address and with a tunnel endpoint received from or provided by the access gateway and/or the MME.
   The UE's vMAC is the source MAC address. If uplink data is available at an early time, the BS may skip point (5) utilizing actual user data packages for vMAC learning purposes throughout the EMS.
(7) The BS confirms bearer establishment to the MME. The BS has allocated vTEIDs for each bearer. That information can be conveyed via parameters that can be utilized - in case of no layer-2 mobility - for the downlink tunnel endpoint (DL TEID).
(8) The MME instructs the access gateway to establish the downlink bearers. It may forward the vTEID to the S-GW in particular in addition to the vMAC of the UE and the EPS ID of the BS.
(9) The S-GW starts downlink data transfer with the vMAC of the UE utilized as destination MAC address and with the vTEID identifying a specific bearer for this UE.
   The S-GW may also add an IP destination address in order to provide compatibility with IP deployment scenarios. This may be the IP address of the BS, which is not used for routing purposes as it will not change if the BS changes within an EMS due to a handover. Thus, advantageously, the nodes of the EMS (BSs, serving port of the access gateway) may belong to the same IP sub-network.
   The S-GW chooses the interface and/or port and/or VLAN that is associated with a CE-tunnel related to the EMS.
   The BS maps the packets received to the respective radio bearer of the UE. As an option, the EAF of the BS may rebuild the tunnel header of the packet (in 3GPP: of the GTP header) to allow unchanged packet routing and/or handling in the BS by substituting vMAC and vTEID by a DL TEID that is assigned by the BS.

### Intra EMS Mobility

**Fig.5** shows a message sequence chart visualizing a BS-to-BS handover within an EMS.

Hereinafter the messages are described. The numbers depicted correspond to the numbers of the messages shown in Fig.5 (as an example, eNBs are used instead of BSs):
(1) A handover decision (trigger) may be based on measurements.
(2) A source eNB sends a HO request to a target eNB.
   The HO request message comprises information to prepare the target eNB for the actual handover (e.g., a target cell ID, EPS bearer context). The EPS bearer context may comprise QoS profiles of the EPS bearers.
   To support Ethernet mobility, the EAF of the source eNB may provide the vMAC address of the UE.
   An MME C-plane TEID (as given in UE S1 EPC signaling context reference) may be preferred. Such measure would allow keeping the control plane functionalities on L3.
   In order to handle the EPS bearer context (Bearer QoS, UL TFT, Linked Bearer ID, etc.), the EAF of the source eNB may add a virtual TEID field (vTEID) to the EPS bearer context.
   This vTEID may provide a binding between the packets transmitted over the layer-2 interface between the eNB and the access gateway. Said vTEID may also enable processing of the bearers with the eNB.
   The EAF may map received layer-2 packets to the eNB utilizing said vTEID. The eNB uses this functionality only internally in case Ethernet mobility is available and in case it is capable of processing Ethernet mobility.
(3) The target eNB sends an HO request acknowledge message to the source eNB.
(4) A HO command is conveyed from the source eNB to the UE to trigger the UE to switch to the new cell and/or target eNB.
(5) The source eNB transfers status information to the target eNB.
(6) A HO confirmation message is conveyed from the UE to the target eNB. The UE is now able to receive packets via the target eNB.
(7) Since the EAF is aware of the UE's vMAC, it may start advertising said vMAC towards the EMS (and to the S-GW) to quickly switch the DL user plane path.
   It is noted that packets destined to the UE may continue arriving at the source eNB as long as the switches did not update their MAC entries. Via said advertising it is possible to receive the DL frames at the target eNB (e.g., in case of intra EMS handovers).
   Advertising can be achieved by the target eNB sending an ARP message or a "ping"-message to the S-GW in case there are no uplink packages from the UE available yet which use the vMAC of the UE as source address.
   Preferably, all switches of the EMS may learn the new location of the UE within the EMS (i.e. the UE's association with the target eNB). Additionally, the S-GW is able to notice that the frame from UE vMAC is received using the same EMS and/or VLAN ID as previous to the handover.
(8) The target eNB sends a "Path Switch"-request message to the MME to inform the MME that the UE has changed its cell. The MME may determine that the S-GW can continue serving this UE.
   From the Cell ID/BS ID the MME can also derive that no path switch is required and that no UP switching request to the S-GW needs to be sent.
   If eNB DL TEIDs are sent, vTEIDs will be preferably used instead of the TEIDs.
(9) The MME confirms the Path Switching to the target eNB.
(10) The resources reserved in the source eNB can be released. This is indicated by an according message sent from the target eNB to the source eNB.

### Inter EMS Mobility with EMS Change

The call flow is the same as described above.

This case differs from the intra-EMS handover, because the Ethernet tunnel in the aggregation network will change as well as a corresponding VLAN ID.

The S-GW is able to learn from the advertising message (see step (7) in Fig.5) that the VLAN ID has changed. As soon as the S-GW has updated the switching table entries, all DL frames are sent to the new VLAN.

As an option to step (8) of Fig.5, the MME may learn from the Cell/BS ID in the "Path Switch"-request message that a new EMS has to be addressed and the MME may send a UP switching request to the S-GW comprising the new layer-2 connection parameter (e.g., VLAN-ID, CE port and/or interface).

### EMS Handover with S-GW Change

In case the S-GW needs to be changed, the MME may provide a decision subsequent to a "Path Switch"-request (see step (9) of Fig.5).

Then, the MME may send an "Update Bearer"-request message to a further access gateway comprising the vTEIDs and the eNB IP address as well as a binding between the vMAC and the UE and/or the IP address of the UE.

This further access gateway may know from the eNB's IP address which EMS and/or VLAN ID to be used in DL direction. In a "Path-Switch"-acknowledgment message, the MME may provide the further access gateway's MAC address to the target eNB or the eNB may derive it from the further gateway's IP address.

### Usage of GTP with virtual TEIDs in the EAF

Different data bearers may be supported in order to differentiate qualities of service in the radio access.

One bearer context is described by a Bearer QoS, tunneling endpoints (e.g. TEID), UL TFT, and a linked bearer ID.

Data that is transferred in a certain tunnel (identified by TEIDs) is processed according to said Bearer QoS information. The Bearer QoS and TEID mapping can be signaled using an S1 or a GTP-C signaling plane.

If the user plane TEID is neither used nor updated in the Ethernet mobility concept, the following issues will arise:
- How may the Ethernet Layer distinguish between different bearers?
- How is the GTP-C signaling processed, if the UP TEID is not used?

Hence, it is suggested using virtual TEIDs (vTEIDs) at the interface between the eNB and the S-GW.

Thus, the S-GW may allocate a UL TEID for each EPS bearer during a EPS bearer activation procedure. However, if the eNB is asked to allocate a DL TEID for a new bearer, it will provide a virtual TEID instead of the common TEID.

The vTEID differs from the TEID, e.g., as the TEID is node specific. In case of handover, a target eNB may allocate new DL TEIDs from its pool of free TEIDs for the bearers to be handed over.

The virtual TEID concept allows the DL TEID in the eNB to remain unchanged for the lifetime of the bearer, even in case of handover.

When a DL packet arrives at the S-GW, the S-GW replaces its DL TEID that is used by the PDN GW with the DL TEID provided by the eNB. In case of Ethernet mobility, S-GW uses the EAF to encapsulate the DL GTP-U tunnel within the Ethernet frame (source address: S-GW MAC, destination address: UE vMAC, (Ethernet priority)).

It is noted that the Ethernet frame can be conveyed to the correct eNB even if the eNB has changed in the current EMS. Thus, the DL TEID may be virtual and not be strictly bound to a particular eNB.

When a DL frame arrives at the eNB, the EAF unwraps the frame. It uses the destination vMAC and the virtual TEID and maps it to the TEID allocated by the eNB for that UE and bearer. Hence, the eNB is able to use the TEID of the GTP-U header to allocate the frame to the right DL RAB. The GTP-U tunnel in the eNB is identified based on UE identity represented by vMAC and virtual TEID. This combination has to be unique per eNB. However, it is not necessary for a virtual TEID to be unique per base station as is the TEID.

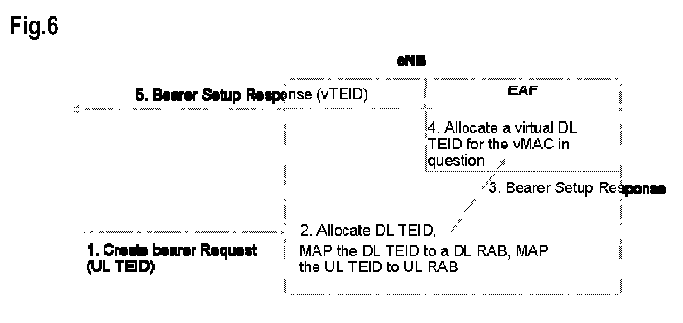

**Fig.6** visualizes details of the EAF in the eNB to provide bearer setup with the vTEID comprising the steps:
(1) A "Create Bearer" request is provided to the eNB comprising the UL TEID.
(2) The eNB allocates the DL TEID and maps this DL TEID to a DL RAB. The eNB also maps the UL TEID to a UL RAB.
(3) A "Bearer Setup" response is provided to the EAF of the eNB.
(4) The EAF allocates a DL vTEID for the actual vMAC.
(5) A "Bearer Setup" response is provided by the EAF of the eNB comprising said vTEID.

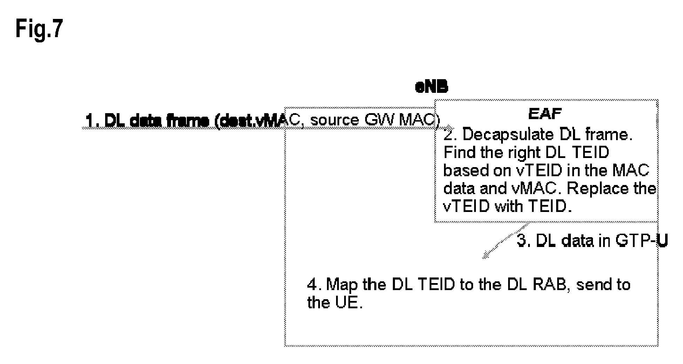

**Fig.7** visualizes details of the EAF in the eNB regarding DL data comprising the steps:
(1) A DL data frame is received at the EAF of the eNB comprising a destination vMAC and a source access gateway MAC address.
(2) The DL data frame is unwrapped by the EAF. The DL TEID is determined based on the vTEID received in the MAC data and in the vMAC. The vTEID is replaced by the TEID.
(3) The DL data is provided via GTP-J.
(4) The eNB maps the DL TEID to a DL RAB and sends it to the UE.

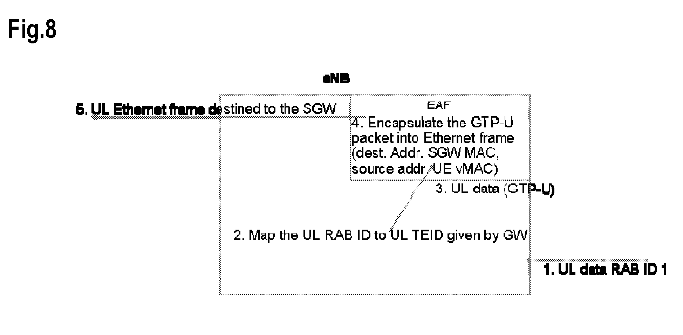

**Fig.8** visualizes details of the EAF in the eNB regarding UL data comprising the steps:
(1) UL data is received at the eNB comprising a RAB ID 1.
(2) The UL RAB ID is mapped to a UL TEID provided by the access gateway.
(3) The UL data is provided via GTP-U to the EAF of the eNB.
(4) The GTP-U packet is wrapped in the Ethernet frame. The Ethernet frame comprises the MAC address of the S-GW as destination address and the vMAC of the UE as source address.
(5) The EAF of the eNB provides an UL Ethernet frame destined to the S-GW.

### List of Abbreviations:

- 3GPP: Third Generation Partnership Project
- ARP: Address Resolution Protocol
- BS: Base Station (also referred to as Node B or eNB)
- CE: Carrier Ethernet
- DHCP: Dynamic Host Configuration Protocol
- DL: downlink
- EAF: Ethernet Adaptation Function
- EMS: Ethernet Mobility Segment
- eNB: evolved Node B
- EPS: Evolved Packet System
- GTP: GPRS Tunneling Protocol
- GW: Gateway
- HO: Handover
- ICMP: Internet Control Message Protocol
- IP: Internet Protocol
- L2: Layer-2
- L3: Layer-3
- LA: Location Area
- LAN: Local Area Network
- MIP: Mobile IP
- MM: Mobility Management
- MME: Mobility Management Entity
- MPLS: Multiprotocol Label Switching
- NW: Network
- O&M: Operation and Maintenance
- PBB-TE: Provider Backbone Bridge Traffic Engineering
- PDN: Packet Data Network
- PE: Provider Edge
- QoS: Quality of Service
- RAB: Radio Access Bearer
- RAN: Radio Access Network
- S/P GW: Serving GW / PDN GW
- S-GW: Serving GW
- TE: Tunnel Endpoint
- TEID: TE Identifier
- TFT: Traffic Flow Template (description on IP layer referring to data that belongs to a bearer)
- UE: User Equipment (also refers to mobile station)
- UL: uplink
- UP: User Plane
- VLAN XC: VLAN Crossconnect
- VLAN: Virtual LAN
- vMAC: virtual MAC address
- VPLS: Virtual Private LAN Service
- VPWS: Virtual Private Wire Service
- vTEID: virtual TEID
- WiMAX: Worldwide Interoperability for Microwave Access

## Claims

1. A method for data processing,
- wherein a mobile terminal addressed and/or served by a base station is associated with a layer-2 address;
- wherein said data is conveyed in a network utilizing said layer-2 address;
- wherein said network comprises a layer-2 network, in particular an Ethernet and/or a carrier Ethernet.

2. The method according to claim 1, wherein the layer-2 address is assigned and/or utilized by a cellular network.

3. The method according to claim 2, wherein the data is conveyed between the base station and an access gateway via said layer-2 network.

4. The method according to claim 3, wherein an Ethernet Adaptation Function is provided with the base station and/or with the access gateway to enable layer-2 processing in particular tunneling between the access gateway and the base station.

5. The method according to any of claims 3 or 4, wherein the layer-2 address is supplied by the access gateway and/or by the base station.

6. The method according to any of the preceding claims, wherein the base station maps the layer-2 address of the mobile terminal to an identifier of the mobile terminal and conveys data towards the mobile terminal via such identifier.

7. The method according to any of the preceding claims, wherein said layer-2 address is assigned to the mobile terminal or to each IP address of the mobile terminal.

8. The method according to any of the preceding claims, wherein said layer-2 address is a virtual MAC address, in particular derived from and/or associated with a unique identifier of the mobile terminal in a serving area.

9. The method according to any of the preceding claims, wherein the base station is assigned to at least one Ethernet mobility segment.

10. The method according to claim 9, wherein each at least one Ethernet mobility segment is processed by at least one Ethernet switch in particular providing a MAC learning functionality.

11. The method according to any of claims 9 or 10, wherein the at least one Ethernet mobility segment is connected to the Ethernet and/or the carrier Ethernet.

12. A device comprising a and/or being associated with a processor unit and/or a hard-wired circuit and/or a logic device that is arranged such that the method according to any of the preceding claims is executable thereon.

13. The device according to claim 12, wherein said device is a communication device, in particular a or being associated with a base station, wherein said device is in particular connected to a layer-2 network.

14. The device according to claim 12, wherein said device is a communication device, in particular a or being associated with an access gateway in particular comprising a control part and a user plane part, wherein said device is in particular connected to a layer-2 network.

15. Communication system comprising a device according to any of claims 12 to 14.
